Europäisches Patentamt

European Patent Office

Office européen des brevets

(19)

(11) Veröffentlichungsnummer : **0 038 973**
**B1**

(12) **EUROPÄISCHE PATENTSCHRIFT**

(45) Veröffentlichungstag der Patentschrift :
25.07.84

(21) Anmeldenummer : 81102699.6

(22) Anmeldetag : 09.04.81

(51) Int. Cl.³ : **C 08 F 10/00, C 08 F 4/64**

(54) **Verfahren zum Herstellen von Homo- und Copolymerisaten von alpha-Monoolefinen mittels eines Ziegler-Katalysatorsystems.**

(30) Priorität : 24.04.80 DE 3015702

(43) Veröffentlichungstag der Anmeldung :
04.11.81 Patentblatt 81/44

(45) Bekanntmachung des Hinweises auf die Patenterteilung : 25.07.84 Patentblatt 84/30

(84) Benannte Vertragsstaaten :
AT BE DE FR GB IT NL

(56) Entgegenhaltungen :
EP-A- 0 002 221
DE-A- 2 635 298
GB-A- 1 532 332

(73) Patentinhaber : **BASF Aktiengesellschaft**
**Carl-Bosch-Strasse 38**
**D-6700 Ludwigshafen (DE)**

(72) Erfinder : **Bachl, Robert, Dr.**
**Parsevalstrasse 16**
**D-6520 Worms (DE)**
Erfinder : **Klaerner, Peter, Dr.**
**Hauptstrasse 62**
**D-6719 Battenberg (DE)**
Erfinder : **Schweier, Guenther, Dr.**
**Friedrich-Pletzsch-Strasse 14**
**D-6701 Friedelsheim (DE)**
Erfinder : **Ehlers, Ehler**
**Ulmenstrasse 13**
**D-6704 Mutterstadt (DE)**

Jouve, 18, rue St-Denis, 75001 Paris, France

**Beschreibung**

Ausgangspunkt für die vorliegende Erdindung ist ein Verfahren zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und
(2) einer Aluminiumverbindung der Formel

$$AlA_{3-n}Xn,$$

worin stehen

A für einen $C_1$- bis $C_{18}$-Kohlenwasserstoffrest, vorzugsweise einen $C_1$- bis $C_{12}$-Alkylrest bzw. $C_3$- bis $C_{12}$-Alkenylrest, und insbesondere einen $C_2$- bis $C_8$-Alkylrest,

X für Chlor, Brom bzw. Wasserstoff, vorzugsweise Chlor bzw. Wasserstoff, und

n für eine Zahl von 0 bis 2, vorzugsweise eine Zahl von 0 bis 1, und insbesondere die Zahl 0, mit den Maßgaben, daß das Atomverhältnis Titan aus der Katalysatorkomponente (1) : Aluminium aus der Katalysatorkomponente (2) im Bereich von 1 : 0,1 bis 1 : 500, vorzugsweise 1 : 0,2 bis 1 : 200 liegt, und daß man

(1.1) zum Herstellen der Katalysatorkomponente (1)
(1.1.1) eine Titanverbindung (I) der Formel

$$TiCl_3 \cdot z(AlCl_3) \text{ oder } Cl_mTi(OB)_{4-m},$$

wobei stehen

z für eine Zahl von 0 bis 0,5, insbesondere eine Zahl von 0,31 bis 0,35 und

m für eine Zahl von 0 bis 3, insbesondere eine Zahl von 0 bis 2, und

B für einen $C_1$- bis $C_{18}$-Alkylrest, insbesondere einen $C_2$- bis $C_8$-Alkylrest, und

(1.1.2) ein Magnesiumalkoholat (II) der Formel

$$Mg(OD)_2,$$

wobei D für einen einwertigen $C_1$- bis $C_{18}$-Kohlenwasserstoffrest gesättigt-aliphatischer und/oder aromatischer Natur, vorzugsweise einen einwertigen $C_1$- bis $C_{10}$-Kohlenwasserstoffrest gesättigt-aliphatischer Natur oder einen Phenylrest und insbesondere einen $C_1$- bis $C_4$-Alkylrest, steht, sowie

(1.1.3) — gegebenenfalls und vorteilhafterweise — ein Metallchlorid (III) der Formel $AlCl_3$, $ZnCl_2$ bzw. $MnCl_2$, vorzugsweise $AlCl_3$,

im Gewichtsverhältnis Titanverbindung (I) : Magnesiumalkoholat (II) von 1 : 200 bis 1 : 0,2 vorzugsweise 1 : 1 bis 1 : 100, sowie Gewichtsverhältnis Titanverbindung (I) : Metallchlorid (III) von 1 : 0 bis 1 : 20, vorzugsweise 1 : 0 bis 1 : 5, über eine Zeitspanne von 1 bis 200, vorzugsweise 5 bis 100 Stunden unter einer Mahlbeschleunigung von 30 bis 70 m/s² — vorzugsweise trocken — miteinander versmahlt unter Bildung eines Vermahlungsproduktes (IV).

Verfahren dieser Gattung sind bekannt, wozu als typische Beispiele die der GB-PS 1 532 332 oder der US-PS 3 941 760 zu entnehmenden genannt werden können.

Die genannten Verfahren haben — ebenso wie in Parallele zu setzende andere Verfahren- zum Kernstück eine in besonderer Weise hergestellte und damit in besonderer Weise ausgestaltete Titan enthaltende Katalysatorkomponente (1).

Die besonderen Ausgestaltungen der Titan enthaltenden Katalysatorkomponente werden vorgenommen, um bestimmte Ziele zu erreichen, wie die folgenden :

(a) Katalysatorsysteme, die eine erhöhte Ausbeute an Polymerisat zu liefern vermögen, nämlich Katalysatorsysteme mit einer erhöhten Produktivität, d. h. Systeme, bei denen die Menge an gebildetem Polymerisat pro Gew.-Einheit der Katalysatorsysteme (1) erhöht ist.

(b) Katalysatorsysteme, durch die weniger bzw. kein Halogen in das Polymerisat eingebracht wird ; — was zu erreichen ist, indem

(b₁) die Ausbeute gemäß (a) gesteigert wird und/oder

(b₂) Titan enthaltene Katalysatorkomponenten eingesetzt werden, die möglichst wenig bzw. kein Halogen enthalten.

(c) Katalysatorsysteme, die ihre positiven Wirkungen auch bei relativ niederen Temperaturen entfalten ; — was z. B. für Trockenphasenpolymerisationen von Bedeutung sein kann.

(d) Katalysatorsysteme, durch welche die morphologischen Eigenschaften der Polymerisate in bestimmter Weise beeinflußt werden, etwa im Sinne einer einheitlichen Korngröße und/oder einer Verminderung des Feinstkornanteils und/oder eines hohen Schüttgewichts ; — was z. B. für die technische Beherrschung der Polymerisationssysteme, die Aufarbeitung der Polymerisate und/oder die Verarbeitbarkeit der Polymerisate von Bedeutung sein kann.

(e) Katalysatorsysteme, die einfach und sicher herzustellen und gut handzuhaben sind ; — z. B. solche, die sich in (inerten) Kohlenwasserstoff-Hilfsmedien zubereiten lassen.

(f) Katalysatorsysteme, die es ermöglichen, bei der Polymerisation unter Einwirkung von Molekulargewichtsreglern, wie Wasserstoff, mit relativ geringen Mengen an Regler auszukommen ; — was z. B. für die Thermodynamik der Verfahrensführung von Bedeutung sein kann.

(g) Katalysatorsysteme, die auf spezielle Polymerisationsverfahren zugeschnitten sind ; — etwa solche, die z. B. entweder auf die spezifischen Besonderheiten der Suspensions polymerisation oder auf die spezifischen Besonderheiten der Trockenphasenpolymerisation abgestimmt sind.

Nach den bisherigen Erfahrungen gibt es unter den mannigfachen Zielen etliche Ziele, die man durch spezielle Ausgestaltungen der Titan enthaltenden Katalysatorkomponente nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt auch die Aufgabenstellung der vorliegenden Erfindung ; Eine neue Art Titan enthaltender Katalysatorkomponente aufzuzeigen, mit der man gegenüber bekannten Titan enthaltenden Katalysatorkomponenten — unter vergleichbarer Zielsetzung — bessere Ergebnisse erreichen kann, insbesondere bessere Ergebnisse in den oben erwähnten Kategorien (b) und (d).

Es wurde gefunden, daß die gestellte Aufgabe gelöst werden kann mit einer Titan enthaltenden Katalysatorkomponente, die ein in besonderer Weise durch eine zweistufige Weiterbehandlung erhaltenes Folgeprodukt des Vermahlungsprodukts (IV) aus dem eingangs definierten Verfahren ist.

Gegenstand der vorliegenden Erfindung ist dementsprechend ein Verfahren zum Herstellen von Homo- und Copolymerisaten von $C_2$- bis $C_6$-$\alpha$-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und
(2) einer Aluminiumverbindung der Formel

$$AlA_{3-n}X_n,$$

worin stehen

A für einen $C_1$- bis $C_{18}$-Kohlenwasserstoffrest, vorzugsweise einen $C_1$- bis $C_{12}$-Alkylrest bzw. $C_3$- bis $C_{12}$-Alkenylrest, und insbesondere einen $C_2$- bis $C_8$-Alkylrest,

X für Chlor, Brom bzw. Wasserstoff, vorzugsweise Chlor bzw. Wasserstoff, und

n für eine Zahl von 0 bis 2, vorzugsweise eine Zahl von 0 bis 1, und insbesondere die Zahl 0, mit den Maßgaben, daß das Atomverhältnis Titan aus der Katalysatorkomponente (1) : Aluminium aus der Katalysatorkomponente (2) im Bereich von 1 : 0,1 bis 1 : 500, vorzugsweise 1 : 0,2 bis 1 : 200 liegt, und daß man

(1.1) zum Herstellen der Katalysatorkomponente (1)
(1.1.1) eine Titanverbindung (I) der Formel

$$TiCl_3 \cdot z(AlCl_3) \text{ oder } Cl_mTi(OB)_{4-m},$$

wobei stehen

z für eine Zahl von 0 bis 0,5, insbesondere eine Zahl von 0,31 bis 0,35 und
m für eine Zahl von 0 bis 3, insbesondere eine Zahl von 0 bis 2, und
B für einen $C_1$- bis $C_{18}$-Alkylrest, insbesondere einen $C_2$- bis $C_8$-Alkylrest, und
(1.1.2) ein Magnesiumalkoholat (II) der Formel

$$Mg(OD)_2,$$

wobei D für einen einwertigen $C_1$- bis $C_{18}$-Kohlenwasserstoffrest gesättigt-aliphatischer und/oder aromatischer Natur, vorzugsweise einen einwertigen $C_1$- bis $C_{10}$-Kohlenwasserstoffrest gesättigt-aliphatischer Natur oder einen Phenylrest und insbesondere einen $C_1$- bis $C_4$-Alkylrest, steht, sowie

(1.1.3) — gegebenenfalls und vorteilhafterweise — ein Metallchlorid (III) der Formel $AlCl_3$, $ZnCl_2$ bzw. $MnCl_2$, vorzugsweise $AlCl_3$,
im Gewichtsverhältnis Titanverbindung (I) : Magnesiumalkoholat (II) von 1 : 200 bis 1 : 0,2, vorzugsweise 1 : 1 bis 1 : 100, sowie Gewichtsverhältnis Titanverbindung (I) : Metallchlorid (III) von 1 : 0 bis 1 : 20, vorzugsweise 1 : 0 bis 1 : 5, über eine Zeitspanne von 1 bis 200, vorzugsweise 5 bis 100 Stunden unter einer Mahlbeschleunigung von 30 bis 70 m/s² — vorzugsweise trocken — miteinander vermahlt unter Bildung eines Vermahlungsproduktes (IV).

Das erfindungsgemäße Verfahren ist dadurch gekennzeichnet, daß man beim Herstellen der Katalysatorkomponente (1)
(1.2) in einer zusätzlichen Stufe
(1.2.1) das gemäß (1.1) erhaltene Vermahlungsprodukt (IV),

(1.2.2) ein $C_1$- bis $C_{12}$-, vorzugsweise ein $C_1$- bis $C_8$-Alkanol (V) und

(1.2.3) ein $C_5$- bis $C_{12}$-, vorzugsweise ein $C_6$- bis $C_8$-Alkan (VI)

in den Gewichtsverhältnissen Vermahlungsprodukt (IV) : Alkanol (V) von 1 : 0,01 bis 1 : 1, vorzugsweise 1 : 0,03 bis 1 : 0,75 und Vermahlungsprodukt (IV) : Alkan (VI) von 1 : 1 bis 1 : 1 000, vorzugsweise 1 : 1 bis 1 : 100, zusammenbringt unter Bildung einer Suspension (VII) und das Ganze bei dauernder Durchmischung über eine Zeitspanne von 0,5 bis 60, vorzugsweise 1 bis 30, und insbesondere 1 bis 10 Minuten auf einer Temperatur von 0 bis 195, vorzugsweise 10 bis 100 °C hält, und dann

(1.3) in einer weiteren zusätzlichen Stufe

(1.3.1) die gemäß (1.2) erhaltene Suspension (VII) mit

(1.3.2) einer Metallverbindung (VIII) der allgemeinen Formel

$$Mt\ G_{s-t}E_t,$$

wobei stehen

Mt für die Metalle Aluminium, Silicium bzw. Titan, vorzugsweise Aluminium,

G für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

E für Chlor, Brom, Wasserstoff bzw. einen Rest —OR, vorzugsweise Chlor bzw. Wasserstoff,

R für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

s für die Zahl der höchsten Wertigkeit des Metalls Mt und

t für (a) eine Zahl von 0 bis s-1, vorzugsweise 1 bis 2, wenn Mt Aluminium ist, (b) eine Zahl von 0 bis 4, vorzugsweise 1 bis 4, wenn Mt Silicium ist, bzw. (c) die Zahl 4, wenn Mt Titan ist,

unter Erhaltung des Zustandes einer Suspension solange versetzt, bis das Atomverhältnis Magnesium aus dem in der Suspension (VII) enthaltenen Feststoff; Metall aus der Metallverbindung (VIII) im Bereich von 1 : 0,1 bis 1 : 20, vorzugsweise 1 : 1 bis 1 ; 10 liegt ;

wobei das aus Stufe (1.3) resultierende, in Suspension vorliegende festphasige Produkt (IX) die Titan enthaltende Katalysatorkomponente (1) ist.

Zu dem erfindungsgemäßen Verfahren ist im einzelnen das Folgende zu bemerken :

Das Polymerisationsverfahren als solches kann — unter Beachtung der kennzeichnenden Besonderheiten — in praktisch allen einschlägig üblichen technologischen Ausgestaltungen durchgeführt werden, etwa als diskontinuierliches, taktweises oder kontinuierliches Verfahren, sei es z. B. als Suspensions-Polymerisationsverfahren, Lösungs-Polymerisationsverfahren oder Trockenphasen-Polymerisationsverfahren. Die erwähnten technologischen Ausgestaltungen — mit anderen Worten : die technologischen Varianten der Polymerisation von Olefinen nach Ziegler — sind aus der Literatur und Praxis wohlbekannt, so daß sich nähere Ausführungen zu ihnen erübrigen. Zu bemerken ist allenfalls noch, daß die neue Titan enthaltende Katalysatorkomponente (1) — wie entsprechende bekannte Katalysatorkomponenten — z. B. außerhalb oder innerhalb des Polymerisationsgefäßes mit der Katalysatorkomponente (2) zusammengebracht werden kann ; im letztgenannten Fall etwa durch räumlich getrennten Eintrag der Komponenten, die im übrigen in Form einer Suspension (Katalysatorkomponente (1)) bzw. Lösung (Katalysatorkomponente (2)) gehandhabt werden können.

Zu der neuen Titan enthaltenden Katalysatorkomponente (1) selbst ist das Folgende zu sagen :

Ihre Herstellung erfolgt in drei Stufen, die oben sowie nachstehend mit (1.1), (1.2) und (1.3) bezeichnet sind.

In Stufe (1.1) werden eine Titanverbindung (I) der oben definierten Art, ein Magnesiumalkoholat (II) der oben definierten Art sowie — gegebenenfalls und vorteilhafterweise — ein bestimmtes Metallchlorid — vorzugsweise trocken — miteinander vermahlen unter Bildung eines Vermahlungsproduktes (IV). In Stufe (1.2) wird letzteres mit einem bestimmten Alkanol (V) sowie einem bestimmten Alkan (VI) zusammengebracht und behandelt unter Bildung einer Suspension (VII). In Stufe (1.3) wird dann die letztgenannte Suspension (VII). In Stufe (1.3) wird dann die letztgenannte Suspension mit einer Metallverbindung (VIII) der oben definierten Art unter Erhaltung des Zustandes einer Suspension versetzt. Das aus Stufe (1.3) resultierende, in Suspension vorliegende festphasige Produkt (IX) ist die neue Titan enthaltende Katalysatorkomponente (1).

Im einzelnen ist dazu das Folgende zu sagen :

## Stufe (1.1)

Die Vermahlung in dieser Stufe ist mit keinen Besonderheiten verbunden und kann vom Fachmann ohne nähere Erläuterung problemlos durchgeführt werden. Zu erwähnen ist allenfalls, daß sich als Mühlen insbesondere Kugelmühlen, vor allem Kugelschwingmühlen, eignen.

## Stufe (1.2)

Das Herstellen der Suspension in dieser Stufe ist ebenfalls mit keinen Schwierigkeiten verbunden und für den Fachmann ohne weiteres möglich. Zu erwähnen ist, daß sich als vorteilhaft herausgestellt hat, zunächst das Vermahlungsprodukt (IV) in dem Alkan (VI) zu suspendieren — so wie man üblicherweise suspendiert, z. B. in einem Rührgefäß — und zu der dabei erhaltenen Suspension dann den Alkohol (V) mit einer solchen Geschwindigkeit zuzugeben, daß örtliche Wärmestaus vermieden werden.

## Stufe (1.3)

Auch diese Stufe ist ohne Probleme durchführbar; zu beachten ist lediglich, daß die dabei ablaufende Reaktion exotherm ist und daher — ebenfalls zur Vermeidung örtlicher größerer Wärmestaus — die Metallverbindung (VIII) nicht schußweise in die Suspension (VII) eingebracht werden sollte.

Die aus Stufe (1.3) als suspendiertes festphasiges Produkt (IX) resultierende neue Titan enthaltende Katalysatorkomponente (1) kann unmittelbar in Form der jeweils erhaltenen Suspension — gegebenenfalls nach einer Wäsche durch Digerieren mit einem Alkan — als Titan enthaltende Katalysatorkomponente verwendet werden. Im allgemeinen ist es aber zweckmäßig, das jeweilige festphasige Produkt zu isolieren und dann erst als Katalysatorkomponente (1) einzusetzen ; — wobei sich zum Isolieren z. B. der folgende Weg anbietet : Man trennt das festphasige Produkt von der flüssigen Phase mittels Filtration und wäscht es mit reinem Alkan (etwa der Art, die man auch als Suspensionsmittel verwendet hatte), worauf man es trocknet, etwa im Vakuum.

Die neuen Titan enthaltenden Katalysatorkomponenten (1), d. h. die festphasigen Produkte (IX), lassen sich im Rahmen des eingangs definierten Verfahrens zum Herstellen der dort genannten Polymerisate so einsetzen, wie man üblicherweise die Titan enthaltenden Verbindungen bei der Polymerisation von Olefinen nach Ziegler einsetzt. Insoweit sind also beim erfindungsgemäßen Verfahren keine Besonderheiten gegeben, und es kann auf die aus Literatur und Praxis wohlbekannten Einsatzweisen verwiesen werden. — Es ist lediglich noch zu sagen, daß das Verfahren sich vornehmlich zum Herstellen von Homopolymerisaten des Äthylens eignet und daß im Falle des Herstellens von Copolymerisaten des Äthylens mit höheren $\alpha$-Monoolefinen oder des Herstellens von Homopolymerisaten von höheren $\alpha$-Monoolefinen vor allem Propen, Buten-1, 4-Methylpenten-1 und Hexen-1 als $\alpha$-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen :

Die in Stufe (1.1) einzusetzenden Titanverbindungen (I) können die der gegebenen Definition entsprechenden einschlägig üblichen sein, z. B. ein Titantrichlorid wie es aus Titantetrachlorid durch Reduktion mit Wasserstoff oder einem Aluminiumtrialkyl entsteht, ein Titantrichlorid-Aluminiumtrichlorid-Cokristallisat der Formel $TiCl_3 \cdot 1/3\ AlCl_3$, wie es bei der Reduktion von Titantetrachlorid mit metallischem Aluminium erhalten wird, ein Titansäuretetraalkylester oder ein Umsetzungsprodukt aus einem der vorgenannten Ester mit nicht mehr als der 3-fachen, insbesondere nicht mehr als der 1-fachen Molmenge Titantetrachlorid. — Die Titanverbindungen (I) können eingesetzt werden in Form von Einzelindividuen sowie Gemischen aus zwei oder mehr Einzelindividuen.

Die ebenfalls in Stufe (1.1) einzusetzenden Magnesiumalkoholate (II) können z. B. solche sein, die abgeleitet sind vom Äthyl-, n-Propyl-, i-Propyl-, n-Butyl-, sec-Butyl- oder tert-Butylalkohol, oder vom Phenol. — Auch die Alkoholate (II) können eingesetzt werden in Form von Einzelindividuen oder Gemischen aus zwei oder mehr Einzelindividuen.

Die — gegebenenfalls — zusätzlich in Stufe (1.1) einzusetzenden Metallchloride (III) sollten in nichthydratisierter Form vorliegen.

In Stufe (1.2) werden $C_1$- bis $C_{12}$-Alkanole (V) eingesetzt ; namentliche Beispiele hierfür sind Methanol, Äthanol, die Propanole sowie die Butanole ; ferner n-Hexanol, 2-Äthyl-hexanol, n-Octanol, n-Decanol und 2,7-Diäthyloctanol. Als besonders gut geeignet haben sich erwiesen, z. B. Methanol, Äthanol, Isopropanol sowie n-Butanol. — Die Alkanole (V) können eingesetzt werden in Form von Einzelindividuen sowie Gemischen aus zwei oder mehr Einzelindividuen.

Ebenfalls in Stufe (1.2) werden eingesetzt $C_5$- bis $C_{12}$-Alkane (VI), z. B. Cyclopentan, Cyclohexan, n-Hexan, n-Heptan, 2-Äthylhexan, n-Octan, n-Decan oder n-Dodecan. Zu bevorzugen sind die Hexane, Heptane und Oktane in Form von Isomerindividuen oder Isomerenmischungen. Besonders gut geeignet ist n-Heptan. — Auch die Alkane (VI) können im übrigen eingesetzt werden in Form von Einzelindividuen sowie Gemischen aus zwei oder mehr Einzelindividuen.

Die in Stufe (1.3) einzusetzenden Metallverbindungen (VIII) enthalten das Metall (Mt) jeweils in der höchsten Wertigkeit, d. h. dreiwertiges Aluminium, vierwertiges Silicium oder vierwertiges Titan. Eine geeignete Metallverbindung (VIII) kann zweckmäßigerweise eine Verbindung aus den folgenden drei Verbindungsklassen sein :

Aluminiumverbindungen, wie sie repräsentiert werden durch die Formeln $Al(C_2H_5)_3$, $Al(C_2H_5)_2Cl$, $Al(C_2H_5)_2Br$, $Al(C_2H_5)_{1,5}Cl_{1,5}$, $Al(C_2H_5)_{1,5}Br_{1,5}$, $Al(C_2H_5)Cl_2$, $Al(C_2H_5)Br_2$, $Al(C_4H_9)_3$, $Al(C_4H_9)_2Cl$, $Al(C_4H_9)Cl_2$, $Al(C_2H_5)_2H$, $Al(C_4H_9)_2H$, $Al(C_3H_7)_2(OC_3H_7)$ und $Al(C_2H_5)_{1,5}(OC_2H_5)_{1,5}$ ; — wovon besonders gut geeignet sind $Al(C_2H_5)_2Cl$, $Al(C_2H_5)_{1,5} \cdot Cl_{1,5}$, $Al(C_2H_5)Cl_2$ sowie $Al(C_2H_5)_2H$.

Siliciumverbindungen, wie sie repräsentiert werden durch die Formeln $SiCl_4$, $SiBr_4$, $Si(CH_3)_2Cl_2$, $Si(CH_3)_3Cl$, $SiHCl_3$, $Si(C_2H_5)_3H$, $Si(OC_2H_5)_4$ und $Si(OC_6H_5)_4$ ; — wovon besonders gut geeignet sind $SiCl_4$, $Si(CH_3)_3Cl$, $Si(C_2H_5)_3Cl$ sowie $Si(C_2H_5)_3H$.

# 0 038 973

Titantetrachlorid

Die Metallverbindungen (VIII) können eingesetzt werden in Form von Einzelindividuen sowie geeigneten Gemischen aus zwei oder mehr Einzelindividuen.

Die Katalysatorkomponente (2) betreffend ist zu sagen, daß sich hierfür die einschlägig üblichen Verbindungen eignen ; als geeignete Individuen sind z. B. zu nennen das $Al(C_2H_5)_3$, $Al(i-C_4H_9)_3$, $Al(n-C_4H_9)_3$, $Al(C_8H_{17})_3$ und Isoprenylaluminium.

Abschließend ist noch zu bemerken, daß die erfindungsgemäßen Titan enthaltenden Katalysatorkomponenten (1) empfindlich gegen hydrolytische sowie oxidative Einflüsse sind. Insoweit sollte man beim Umgang mit diesen Substanzen also die für Ziegler-Katalysatoren einschlägig üblichen Vorsichtsmaßnahmen treffen (z. B. Feuchtigkeitsausschluß, Inertgasatmosphäre).

## Beispiel 1

### a) Herstellen der Titan enthaltenden Katalysatorkomponente

#### Erste Stufe

Eine Titanverbindung (I) der Formel $TiCl_3 \cdot 0{,}33\ AlCl_3$ und Magnesiumphenolat (II) werden im Gewichtsverhältnis Titanverbindung (I) : Magnesiumverbindung (II) von 1 : 8 über eine Zeitspanne von 20 Stunden unter einer Mahlbeschleunigung von 50 m/s² trocken miteinander vermahlen (in einer üblichen Kugelmühle) unter Bildung eines Vermahlungsproduktes (IV).

#### Zweite Stufe

1 Gew.-Teil des aus der ersten Stufe erhaltenen Vermahlungsproduktes (IV), 0,28 Gew.-Teile Äthanol (V) und 5 Gew.-Teile n-Heptan (VI) werden derart zusammengebracht, daß man zunächst das Vermahlungsprodukt im n-Heptan suspendiert und dann innerhalb von 6 Minuten das Äthanol zur Suspension gibt. Das Ganze (= Suspension VII) wird daraufhin unter kräftigem Rühren über eine Zeitspanne von 20 Minuten auf einer Temperatur von 50 °C gehalten.

#### Dritte Stufe

Die aus der zweiten Stufe erhaltene Suspension (VII) wird bei einer Temperatur von 25 °C mit Siliziumtetrachlorid unter Erhaltung des Zustandes einer Suspension solange langsam (15 Minuten) versetzt, bis das Atomverhältnis Magnesium aus dem in der Suspension (VII) enthaltenen Feststoff : Silizium 1 : 1 beträgt.

Das aus der dritten Stufe resultierende, in Suspension vorliegende festphasige Produkt, d. h. die gewünschte Titan enthaltende Katalysatorkomponente, wird isoliert durch Absaugen, Waschen mit n-Heptan und Trocknen bei 25 °C unter vermindertem Druck ; der Titangehalt beträgt 2,88 Gew.-%, und der Chlorgehalt 44,9 Gew.-%.

### b) Polymerisation mittels der Titan enthaltenden Katalysatorkomponente

In einem Rührautoklaven — der damit zur Hälfte seines Fassungsvermögens gefüllt ist — werden 4 500 Gew.-Teile Isobutan vorgelegt ; daraufhin fügt man 0,1 Gew.-Teile der erfindungsgemäßen Katalysatorkomponente (in Form einer 15 Gew.-% Feststoff enthaltenden Suspension in n-Heptan) sowie 2,5 Gew.-Teile Triäthylaluminium zu. Sodann wird unter Rühren und bei den — jeweils durch Regelung konstant gehaltenen — Parametern : Äthylendruck = 20 bar, Wasserstoffdruck (zur Molekulargewichtsregelung) = 5 bar, Temperatur = 100 °C, über eine Zeitspanne von 2 Stunden polymerisiert, wonach die Polymerisation durch Entspannen des Autoklaven abgebrochen wird.

Nähere Angaben zu dem erhaltenen Polymerisat finden sich in der unten stehenden Tabelle.

## Beispiel 2

### a) Herstellen der Titan enthaltenden Katalysatorkomponente

#### Erste Stufe

Eine Titanverbindung (I) der Formel $TiCl_3$, Magnesiumäthylat (II) sowie Aluminiumchlorid (III) werden im Gew.-Verhältnis Titanverbindung (I) : Magnesiumverbindung (II) von 1 : 3 sowie Gew.-Verhältnis Titanverbindung (I) : Metallchlorid (III) von 1 : 1 über eine Zeitspanne von 40 Stunden unter einer Mahlbeschleunigung von 50 m/s² trocken miteinander vermahlen (in einer üblichen Kugelmühle) unter Bildung eines Vermahlungsproduktes (IV).

6

## Zweite Stufe

1 Gew.-Teil des aus der ersten Stufe erhaltenen Vermahlungsproduktes (IV), 0,4 Gew.-Teile n-Butanol (V) und 2,7 Gew.-Teile Cyclohexan (VI) werden derart zusammengebracht, daß man zunächst das Vermahlungsprodukt im Cyclohexan suspendiert und dann innerhalb von 30 Minuten das n-Butanol zur Suspension gibt. Das Ganze (= Suspension VII) wird daraufhin unter kräftigem Rühren über eine Zeitspanne von 15 Minuten auf einer Temperatur von 50 °C gehalten.

## Dritte Stufe

Die aus der zweiten Stufe erhaltene Suspension (VII) wird bei einer Temperatur von 25 °C mit Titantetrachlorid unter Erhaltung des Zustandes einer Suspension solange langsam (10 Minuten) versetzt, bis das Atomverhältnis Magnesium aus dem in der Suspension (VII) enthaltenen Feststoff : Titan 1 : 1 beträgt. Anschließend wird das Ganze bei einer Temperatur von 25 °C noch 4 weitere Stunden gerührt.

Das aus der dritten Stufe resultierende, in Suspension vorliegende festphasige Produkt, d. h. die gewünschte Titan enthaltende Katalysatorkomponente, wird isoliert durch Absaugen, Waschen mit n-Heptan und Trocknen bei 25 °C unter vermindertem Druck ; der Titangehalt beträgt 8,41 Gew.-% und der Chlorgehalt 49,97 Gew.-%.

### b) Polymerisation mittels der Titan enthaltenden Katalysatorkomponente

Sie erfolgt unter identischen Bedingungen, wie in Beispiel 1, jedoch unter Verwendung der vorstehend beschriebenen Katalysatorkomponente.

Nähere Angaben zu dem dabei erhaltenen Polymerisat finden sich ebenfalls in der unten stehenden Tabelle.

## Beispiel 3

### a) Herstellen der Titan enthaltenden Katalysatorkomponente

#### Erste Stufe

Eine Titanverbindung (I) der Formel $Cl_1Ti(OB)_3$ — mit B = iso-Butyl —, Magnesium-n-Butylat (II) sowie Zinkchlorid (III) werden im Gew.-Verhältnis Titanverbindung (I) : Magnesiumverbindung (II) von 1 : 2,3 sowie Gew.-Verhältnis Titanverbindung (I) : Metallchlorid (III) von 1 : 1,4 über eine Zeitspanne von 30 Stunden unter einer Mahlbeschleunigung von 55 $m/s^2$ trocken miteinander vermahlen (in einer üblichen Kugelmühle) unter Bildung eines Vermahlungsproduktes (IV).

#### Zweite Stufe

1 Gew.-Teil des aus der ersten Stufe erhaltenen Vermahlungsproduktes (IV), 0,28 Gew.-Teile Äthanol (V) und 2,7 Gew.-Teile n-Heptan (VI) werden derart zusammengebracht, daß man zunächst das Vermahlungsprodukt im n-Heptan suspendiert und dann innerhalb von 5 Minuten das Äthanol zur Suspension gibt. Das Ganze (= Suspension VII) wird daraufhin unter kräftigem Rühren über eine Zeitspanne von 15 Minuten auf einer Temperatur von 45 °C gehalten.

#### Dritte Stufe

Die aus der zweiten Stufe erhaltene Suspension (VII) wird bei einer Temperatur von 25 °C mit Äthylaluminiumdichlorid unter Erhaltung des Zustandes einer Suspension solange langsam (15 Minuten) versetzt, bis das Atomverhältnis Magnesium aus dem in der Suspension (VII) enthaltenen Feststoff : Aluminium 1 : 1,5 beträgt.

Das aus der dritten Stufe resultierende, in Suspension vorliegende festphasige Produkt, d. h. die gewünschte Titan enthaltende Katalysatorkomponente, wird isoliert durch Absaugen, Waschen mit n-Heptan und Trocknen bei 25 °C unter vermindertem Druck ; der Titangehalt beträgt 5,8 Gew.-% und der Chlorgehalt 38,45 Gew.-%.

### b) Polymerisation mittels der Titan enthaltenden Katalysatorkomponente

Sie erfolgt unter identischen Bedingungen, wie in Beispiel 1, jedoch unter Verwendung der vorstehend beschriebenen Katalysatorkomponente.

Nähere Angaben zu dem dabei erhaltenen Polymerisat finden sich wiederum in der unten stehenden Tabelle.

In der Tabelle bedeuten :

7

PE = Ausbeute an Polyäthylen in Gew.-Teilen

PE/Kk = Produktivität in Gew.-Teilen Polyäthylen pro Gew.-Teil erfindungsgemäßer Katalysatorkomponente

PE/Ti = Produktivität in Gew.-Teilen Polyäthylen pro Gew.-Teil Titan in der erfindungsgemäßen Katalysatorkomponente

Sch = Schüttgewicht in g/l

MI = Schmelzindex $Mi_{2,16}^{190}$ (g/10 Min)

% < 0,1 = Anteil an Polyäthylen-Partikeln in Gew.-% mit einem Teilchendurchmesser von kleiner 0,1 mm (Feinstkornanteile).

### Tabelle

| Beispiel | PE | PE/Kk | PE/Ti | Sch | MI | % 0,1 |
|---|---|---|---|---|---|---|
| 1 | 2600 | 26 000 | 903 000 | 425 | 0,4 | 0,5 |
| 2 | 3680 | 36 800 | 437 600 | 440 | 1,3 | 0,7 |
| 3 | 4750 | 47 500 | 819 000 | 430 | 0,94 | 0,35 |

**Anspruch**

Verfahren zum Herstellen von Homo- und Copolymerisaten von $C_2$-bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Aluminiumverbindung der Formel

$$AlA_{3-n}X_n,$$

worin stehen

A für einen $C_1$-bis $C_{18}$-Kohlenwasserstoffrest,

X für Chlor, Brom bzw. Wasserstoff,

n für eine Zahl von 0 bis 2,

mit den Maßgaben, daß das Atomverhältnis Titan aus der Katalysatorkomponente (1) : Aluminium aus der Katalysatorkomponente (2) im Bereich von 1 : 0,1 bis 1 : 500 liegt, und daß man

(1.1) zum Herstellen der Katalysatorkomponente (1)

(1.1.1) eine Titanverbindung (I) der Formel

$$TiCl_3 - z(AlCl_3) \text{ oder } Cl_mTi(OB)_{4-m},$$

wobei stehen

z für eine Zahl von 0 bis 0,5,

m für eine Zahl von 0 bis 3, und

B für einen $C_1$-bis $C_{18}$-Alkylrest, und

(1.1.2) ein Magnesiumalkoholat (II) der Formel

$$Mg(OD)_2,$$

wobei D für einen einwertigen $C_1$- bis $C_{18}$-Kohlenwasserstoffrest gesättigt-aliphatischer und/oder aromatischer Natur steht, sowie

(1.1.3) — gegebenenfalls — ein Metallchlorid (III) der Formel $AlCl_3$, $ZnCl_2$ bzw. $MnCl_2$, im Gewichtsverhältnis Titanverbindung (I) : Magnesiumalkoholat (II) von 1 : 200 bis 1 : 0,2 sowie Gewichtsverhältnis Titanverbindung (I) : Metallchlorid (III) von 1 : 0 bis 1 : 20 über eine Zeitspanne von 1 bis 200 Stunden unter einer Mahlbeschleunigung von 30 bis 70 m/s² miteinander vermahlt unter Bildung eines Vermahlungsproduktes (IV), dadurch gekennzeichnet, daß man beim Herstellen der Katalysatorkomponente (1)

(1.2) in einer zusätzlichen Stufe

(1.2.1) das gemäß (1.1) erhaltene Vermahlungsprodukt (IV)

(1.2.2) ein $C_1$- bis $C_{12}$-Alkanol (V) und

(1.2.3) ein $C_5$- bis $C_{12}$-Alkan (VI)

in den Gewichtsverhältnissen Vermahlungsprodukt (IV) : Alkanol (V) von 1 : 0,01 bis 1 : 1 und Vermahlungsprodukt (IV) : Alkan (VI) von 1 : 1 bis 1 : 1000 zusammenbringt unter Bildung einer Suspension (VII) und das Ganze bei dauernder Durchmischung über eine Zeitspanne von 0,5 bis 60 Minuten auf einer Temperatur von 0 bis 195 °C hält, und dann

(1.3) in einer weiteren zusätzlichen Stufe

(1.3.1) die gemäß (1.2) erhaltene Suspension (VII) mit

(1.3.2) einer Metallverbindung (VIII) der allgemeinen Formel

$$Mt\ G_{s-t}E_t,$$

wobei stehen

Mt für die Metalle Aluminium, Silicium bzw. Titan,

G für einen $C_1$- bis $C_{12}$-Kohlenwasserstoffrest,

E für Chlor, Brom, Wasserstoff bzw. einen Rest —OR,

R für einen $C_1$- bis $C_{12}$-Kohlenwasserstoffrest,

s für die Zahl der höchsten Wertigkeit des Metalls Mt und

t für (a) eine Zahl von 0 bis s − 1, wenn Mt Aluminium ist, (b) eine Zahl von 0 bis 4, wenn Mt Silizium ist bzw. (c) die Zahl 4, wenn Mt Titan ist,

unter Erhaltung des Zustandes einer Suspension solange versetzt, bis das Atomverhältnis Magnesium aus dem in der Suspension (VII) enthaltenen Feststoff : Metall aus der Metallverbindung (VIII) im Bereich von 1 : 0,1 bis 1 : 20 liegt ;

wobei das aus Stufe (1.3) resultierende, in Suspension vorliegende festphasige Produkt (IX) die Titan enthaltende Katalysatorkomponente (1) ist.

## Claim

A process for the preparation of homopolymers and copolymers of $C_2$-$C_6$-$\alpha$-monoolefins by polymerizing the monomer or monomers at from 30 to 200 °C, under a pressure of from 0.1 to 200 bar, by means of a Ziegler catalyst system comprising

(1) a titanium-containing catalyst component and

(2) an aluminium compound of the formula

$$AlA_{3-n}X_n$$

where

A is a $C_1$-$C_{18}$-hydrocarbon radical,

X is chlorine, bromine or hydrogen, and

n is from 0 to 2, with the provisos that the atomic ratio of titanium from catalyst component (1) to aluminium from catalyst component (2) is from 1 : 0.1 to 1 : 500, and that

(1.1) to prepare the catalyst component (1)

(1.1.1) a titanium compound (I) of the formula

$$TiCl_3 \cdot z(AlCl_3)\ \text{or}\ Cl_m Ti(OB)_{4-m}$$

where z is from 0 to 0.5, m is from 0 to 3, and B is $C_1$-$C_{18}$-alkyl, and

(1.1.2) a magnesium alcoholate (II) of the formula

$$Mg(OD)_2$$

where D is a monovalent $C_1$-$C_{18}$ saturated-aliphatic and/or aromatic hydrocarbon radical,

(1.1.3) with or without a metal chloride (III) of the formula $AlCl_3$, $ZnCl_2$ or $MnCl_2$,

in a weight ratio of titanium compound (I) to magnesium alcoholate (II) of from 1 : 200 to 1 : 0.2, and in a weight ratio of titanium compound (I) to metal chloride (III) of from 1 : 0 to 1 : 20, are milled with one another for from 1 to 200 hours, under a milling acceleration of from 30 to 70 m/s², to form a milled product (IV), in which process, when preparing the catalyst component (1)

(1.2) in an additional stage

(1.2.1) the milled product (IV) obtained according to (1.1)

(1.2.2) a $C_1$-$C_{12}$-alkanol (V), and

(1.2.3) a $C_5$-$C_{12}$-alkane (VI)

are brought together in a weight ratio of milled product (IV) to alkanol (V) of from 1 : 0.01 to 1 : 1, and in a weight ratio of milled product (IV) to alkane (VI) of from 1 : 1 to 1 : 1,000, to form a suspension (VII), and the batch is kept, with continuous mixing, at from 0 to 195 °C, for a period of from 0.5 to 60 minutes, after which

(1.3) in a further additional stage
(1.3.1) there is added, to the suspension (VII) obtained according to (1.2),
(1.3.2) a metal compound (VIII) of the general formula

$$Mt \; G_{s-t}E_t$$

where
Mt is aluminium, silicon or titanium,
G is a $C_1$-$C_{12}$-hydrocarbon radical,
E is chlorine, bromine, hydrogen or —OR,
R is a $C_1$-$C_{12}$-hydrocarbon radical,
s is the maximum valency of the metal Mt, and
t is (a) from 0 to s − 1 if Mt is aluminium, (b) from 0 to 4 if Mt is silicon, and (c) 4 if Mt is titanium, whilst maintaining a suspension state, addition being continued until the atomic ratio of magnesium from the solid contained in suspension (VII) to metal from the metal compound (VIII) is from 1 : 0.1 to 1 : 20, the product (IX), which results from stage (1.3) and is present as a solid phase in the suspension, constituting the tianium-containing catalyst component (1).

## Revendication

Procédé pour la préparation d'homo- et de co-polymères d'α-mono-oléfines en $C_2$ à $C_6$ par polymérisation d'un monomère ou de monomères à des températures de 30 à 200 °C et sous des pressions de 0,1 à 200 bars en présence d'un système catalytique selon Ziegler, composé de
(1) une composante catalytique au titane et
(2) un dérivé de l'aluminium de la formule

$$AlA_{3-n}X_n,$$

dans laquelle
A = groupe hydrocarboné en $C_1$ à $C_{18}$
X = atome de chlore, de brome ou d'hydrogène et
n = un nombre de 0 à 2,
dans lequel le rapport atomique du titane de la composante catalytique (1) à l'aluminium de la composante catalytique (2) se situe entre 1 : 0,1 et 1 : 500 et
(1.1) la composante catalytique (1) a été préparée par un broyage de
(1.1.1) un dérivé du titane (I) de l'une des formules

$$TiCl_3 \cdot z(AlCl_3) \; et \; Cl_mTi(OB)_{4-m},$$

où z = un nombre de 0 à 0,5, m = un nombre de 0 à 3 et B = un radical alkyle en $C_1$ à $C_{18}$, et
(1.1.2) un alcoolate de magnésium (II) de la formule

$$Mg(OD)_2,$$

où D représente un reste hydrocarboné monovalent en $C_1$ à $C_{18}$ de nature saturée-aliphatique et (ou) aromatique, et éventuellement de
(1.1.3) un chlorure de métal (III) de l'une des formules $AlCl_3$, $ZnCl_2$ ou $MnCl_2$,
avec des proportions pondérales du dérivé du titane (I) à l'alcoolate de magnésium (II) dans un rapport de 1 : 200 à 1 : 0,2 et du dérivé du titane (I) au chlorure de métal (III) dans un rapport de 1 : 0 à 1 : 20, pendant une durée de 1 à 200 heures sous une accélération du broyage de 30 à 70 m/s$^2$, produisant un produit de broyage (IV), caractérisé en ce que, lors de la préparation de la composante catalytique (1),
(1.2) dans un stade supplémentaire,
(1.2.1) le produit de broyage (IV) obtenu sub (1.1),
(1.2.2) un alcanol (V) en $C_1$ à $C_{12}$ et
(1.2.3) un alcane (VI) en $C_5$ à $C_{12}$
sont mélangés dans des proportions pondérales du produit de broyage (IV) à l'alcanol (V) dans un rapport de 1 : 0,01 à 1 : 1 et du produit de broyage (IV) à l'alcane (VI) de 1 : 1 à 1 : 1000, la suspension (VII) formée étant maintenue pendant 0,5 à 60 minutes, sous une agitation constante, à une température comprise entre 0 et 195 °C, et
(1.3) dans encore un stade supplémentaire, on ajoute en agitant et en conservant l'état de suspension, à
(1.3.1) la suspension (VII) obtenue sub (1.2),
(1.3.2) un dérivé de métal (VIII) de la formule générale

$$Mt\ G_{s-t}E_{t},$$

dans laquelle

Mt désigne l'un des métaux aluminium, silicium ou titane

G désigne un reste hydrocarboné en $C_1$ à $C_{12}$

E désigne un atome de chlore, de brome ou d'hydrogène ou un groupe —OR, où

R = reste hydrocarboné en $C_1$ à $C_{12}$

s est le nombre correspondant à la valence la plus élevée du métal Mt et

t = (a) 0 à s − 1 si Mt = Al, (b) 0 à 4 si Mt = Si et (c) 4 si Mt = Ti, jusqu'au moment où le rapport atomique du magnésium contenu dans la matière solide présente dans la suspension (VII) au métal du dérivé (VIII) se situe entre 1 : 0,1 et 1 : 20,

le produit à phase solide (IX) en suspension, produit dans le stade (1.3), constituant la composante catalytique au titane (1).